(19) Europäisches Patentamt
European Patent Office
Office européen des brevets

(11) EP 4 791 088 A1

(12) EUROPEAN PATENT APPLICATION

(43) Date of publication:
**12.08.2026 Bulletin 2026/33**

(21) Application number: **26155460.4**

(22) Date of filing: **30.01.2026**

(51) International Patent Classification (IPC):
***H04W 48/16*** *(2009.01)* *H04W 48/18* *(2009.01)*
*H04W 84/06* *(2009.01)*

(52) Cooperative Patent Classification (CPC):
**H04W 48/16;** H04W 48/18; H04W 84/06

(84) Designated Contracting States:
**AL AT BE BG CH CY CZ DE DK EE ES FI FR GB GR HR HU IE IS IT LI LT LU LV MC ME MK MT NL NO PL PT RO RS SE SI SK SM TR**
Designated Extension States:
**BA**
Designated Validation States:
**GE KH LA MA MD TN**

(30) Priority: **07.02.2025 GB 202501849**

(71) Applicant: **Vodafone Group Services Limited**
**Newbury RG14 2FN (GB)**

(72) Inventors:
- **KULAKOV, Alexey**
  **London, W2 6BY (GB)**
- **LU, Yang**
  **London, W2 6BU (GB)**
- **WILD, Peter Alexander**
  **London, W2 6BY (GB)**
- **PUDNEY, Chris**
  **London, W2 6BY (GB)**

(74) Representative: **Boult Wade Tennant LLP**
**Salisbury Square House**
**8 Salisbury Square**
**London EC4Y 8AP (GB)**

# (54) IMPROVED SATELLITE CELLULAR COMMUNICATIONS

(57) Method and system for user equipment (UE) to access the communications network comprising the UE receiving a public land mobile network identifier (PLMN ID) from the communications network. The UE determining that the received PLMN ID is associated with a non-terrestrial network (NTN) by matching the received PLMN ID with a PLMN ID stored within the UE. When the UE determines that the received PLMN ID is associated with an NTN, modifying operating characteristics of the UE.

Ground base station transmits to satellite
110
100
Satellite receives and retransmits data
120
UE receives data
130
UE extracts PLMN ID from data
140
UE matches extracted PLMN ID to stored PLMN ID
150
Yes
Is PLMN ID associated with an NTN?
160
No
Apply NTN operating parameters
170
Maintain terrestrial operating parameters
180

Figure 2



Processed by Luminess, 75001 PARIS (FR)

## Description

### Field of the Invention

The present invention relates to a system and method for enabling user equipment (UE) to connect more effectively to a non-terrestrial network and in particular, when using satellite communications.

### Background of the Invention

In Release 17 of the 3rd Generation Partnership Project (3GPP) specifications (3GPP TS 36.331, 3GPP TS 36.304, 3GPP TS 38.331 and 3GPP TS 38.304), user equipment (UE) identifies accessing to satellite networks through the "cellBarredNTN" indicator broadcast by satellite base stations operating in E-UTRAN or NR radio access technology. This indicator can inform the UE whether a cell is for Non-Terrestrial Network (NTN) or satellite access, as specified in as specified in TS38,300 clause 16.14.3.1 as follows. "The UE can determine the network type (terrestrial or non-terrestrial) implicitly by the existence of cellBarredNTN in SIB1." However, if this indicator is not set, the UE may not be aware that it is accessing a satellite network and when the system is otherwise unmodified and provides satellite access to the UE. In this case, the UE is unable to apply any required or preferable satellite access specific functions and features defined in 3GPP. Without these configuration changes, the UE may operate in a sub-optimal way when access an NTN base station, which may increase battery consumption.

Therefore, there is required a method and system that overcomes these problems.

### Summary of the Invention

TS22.261 defines a satellite as a space-borne vehicle that provides a bent-pipe payload placed into low-Earth orbit (LEO), medium-earth orbit (MEO) or geostationary satellite Earth orbit (GEO). Satellite access provides direct connectivity between the satellite and one or more UEs on the ground.

Bent-pipe transmissions enable the satellite transceiver to repeat transmissions or broadcasts from a base station (gNodeB) on the ground. With LEO or MEO orbits, satellites will over-fly the ground base stations at intervals. Whenever a satellite passes over, it will retransmit signals to and from the ground base station and UEs within coverage of the satellite at that time.

The process of a UE or mobile device (e.g., cell phone or smartphone) obtaining access to a communications network ground base station through a satellite communications link involves the communications network transmitting signals containing data including a public land mobile network identifier (PLMN ID) through the satellite transceiver and received by UEs on the ground. The PLMN ID may be included a master information block (MIB) and/or a system information block type 1 (SIB1) message. The SIB1 message may include a cellBarredNTN parameter. This parameter can be used by receiving UEs to determine the signal or broadcast is using a non-terrestrial (satellite) network. However, this is not always implemented. It is intended that UEs can use the NTN in a similar way to terrestrial networks (e.g., when no terrestrial signal is available). Therefore, satellites provide UEs with improved coverage. Whilst hardware changes are not required to make use of an NTN network, certain configurations and parameters should be changed within the UE so that the higher latency and lower capacity NTN signals can be used more effectively. If the cellBarredNTN parameter in the broadcast is not present or not received, the UE may remain in a ground-based configuration even though it is interacting with an NTN. Under these circumstances there may be no way for the UE to determine the link type (terrestrial or non-terrestrial).

Instead, the UE receives from the communications network a PLMN ID that corresponds with one stored (in advance) within the UE. There may be a list of NTN PLMN IDs stored within the universal integrated circuit card (UICC) or SIM of the UE. These may be stored in a location reserved for NTN PLMN IDs. Alternatively, the PLMN IDs may be stored together with data indicating whether or not they are NTN PLMN IDs (e.g., a NTN flag or other data). Both NTN and terrestrial PLMN IDs may be stored together. These data may be static or updated at intervals, for example.

In another example, the PLMN ID stored within the UE may be single PLMN ID that is always used for NTN communications. This may be stored outside of the UICC or SIM or may be hard-coded within software or firmware within the UE.

In any case, once the UE receives the PLMN ID (before determining if the communication was via the NTN or not), the UE can match the PLMN ID with the one or more stored NTN PLMN IDs. When the UE determines a match and that that the UE is accessing an NTN cell, the UE alters its configuration or parameters so that it is more optimised for use with the NTN cell, rather than a terrestrial cell. For example, the UE may apply an extended non-access stratum (NAS) timer and/or an extended PLMN search timer. These can compensate for higher latency signals and so avoids failed synchronisation. This also improves battery consumption by reducing repeated messaging, for example. Furthermore, when the UE determines that it has received a signal from an NTN, it can determine whether or not to attempt to access a different base

station (and preferably a terrestrial base station) even if the signal received from the NTN is stronger than neighbouring ground base station communications.

In accordance with a first aspect there is provided a method for user equipment (UE) to access a communications network, the method comprising:

the UE receiving a public land mobile network identifier (PLMN ID) from the communications network;
the UE determining that the received PLMN ID is associated with a non-terrestrial network (NTN) by matching the received PLMN ID with a PLMN ID stored within the UE; and
when the UE determines that the received PLMN ID is associated with an NTN, operating characteristics of the UE. Therefore, each UE in a communications network can operate more effectively and efficiently depending on whether it is accessing a terrestrial network or an NTN. This can also save battery power as messaging can be better optimised. Using this PLMN ID transmission technique means that no significant change to the UE is required. The NTN access specific characteristics may include any configuration or parameter changes required or preferable for satellite access specific functions and features defined in 3GPP, for example.

Optionally, the PLMN ID associated with the NTN stored within the UE may be stored within a universal integrated circuit card (UICC). Other storage locations may be used. The UICC can be a SIM, or USIM. Using the UICC can also reduce required configuration changes to existing UEs (e.g., smart phones, cell phones, etc.).

Optionally, the PLMN ID stored within the UICC may be one of a plurality of PLMN IDs, and further wherein the UE matches the PLMN ID received from the communications network with one of the PLMN IDs stored within the UICC. The NTN PLMN ID may be defined in advance and broadcast only by base stations that use satellite communications.

Optionally, the PLMN ID or PLMN IDs stored within the UICC may be stored with data indicating the PLMN ID is associated with an NTN. For example, PLMN ID(s) may be stored with a flag, indicator, text or other indication. The PLMN ID(s) may be stored as a table or database, for example.

Optionally, the UICC may store additional PLMN IDs that are absent data indicating an association of the PLMN ID with an NTN. Therefore, the storage may store both NTN PLMN IDs and terrestrial PLMN IDs. The configuration or parameters of the UE can switch back and forth between NTN and non-NTN configurations depending on the nature of the PLMN ID that is received (NTN or non-NTN). The stored PLMN IDs may also be used for other purposes (e.g., to prioritise certain networks when roaming).

Optionally, the PLMN ID stored within the UE may be stored external to the UICC. This storage may be within the operating system of the UE or at another location (e.g., non-volatile or ROM memory).

Optionally, the PLMN ID stored within the UE may be stored external to the UICC is a single PLMN ID stored within the UE. This can be the same PLMN ID used for all NTN base stations in a network or across different networks, for example.

Optionally, the PLMN ID stored within the UE may be used for a plurality of communication networks. One PLMN ID may be used for a plurality of different base stations or ground stations across a communications network.

Optionally, the NTN operating characteristics of the UE may further comprise applying an extended non-access stratum (NAS) timer and/or an extended PLMN search timer. Other operating characteristics may be altered or applied to the UE specifically for NTNs.

Optionally, the NTN operating characteristics may further comprise the condition that the UE does not initiate emergency calls, including an NG-eCall, unless no terrestrial (non-NTN) access can be detected.

Optionally, the NTN operating characteristics may further comprise the condition that the UE does not initiate the delay-intolerant services unless no terrestrial (non-NTN) access can be detected.

Optionally, the PLMN ID may be received by the UE from a base station broadcast. The UE may receive the PLMN ID in other ways and from different communication and message types.

Optionally, the base station broadcasts may originate from an Evolved UMTS Terrestrial Radio Access (E-UTRA) or a 5G new radio (NR) base station. The method may be used with other communications technologies.

Optionally, the base station broadcast may a master information block (MIB) and/or a system information block type 1 (SIB1) message. Other broadcast or messaging types may be used to send the PLMN ID to the UE.

Optionally, the method may further comprise before the UE receives the PLMN ID from the communications network, the UE is provisioned with one or more PLMN ID and data indicating the one or more PLMN ID is associated with an NTN. Therefore, the PLMN IDs for NTNs may be updated at intervals or when changes are made to the communications network. Provisioning may take different forms. When the one or more NTN PLMN IDs are stored on a UICC (SIM), the NTN PLMN IDs may be provisioned before deployment. The NTN PLMN IDs may be provisioned or updated by over the air updates, for example.

Optionally, the NTN may be a satellite network. For example, satellites may act as bent pipe communications platforms repeating signals received from ground stations and forwarding signals between UEs and the ground stations. Base stations (gNodeBs) may be located at the ground stations. Other NTN technologies may be used, such as UAVs,

balloons, etc.

Optionally, the method may further comprise when the UE determines that the received PLMN ID is associated with an NTN the UE selecting a terrestrial network when available. Terrestrial networks may be selected in preference to NTNs even when their signal strength or other quality metrics are lower than those of the NTN. This reserves NTN communication to UEs that have no other coverage.

According to a second aspect, there is provide ser equipment (UE) comprising:

one or more processors;
a memory store containing one or more PLMN IDs; and
one or more memory storing computer-executable instructions that, when executed by the processor, cause the UE to:

receive a public land mobile network identifier (PLMN ID) from a communications network;
determine that the received PLMN ID is associated with a non-terrestrial network (NTN) by matching the received PLMN ID with a PLMN ID stored within the memory store; and
after determining that the received PLMN ID is associated with an NTN, modifying operating characteristics of the UE. The UE may be a handset, mobile device, portable computer, smartphone, tablet computer, internet of things (IoT) device, or another cellular device. The operating characteristics of the UE may be modified to be enhanced, optimised or more optimally configured for operation with an NTN compared with a terrestrial network.

Optionally, modifying the operating characteristics of the UE may further comprise applying an extended non-access stratum (NAS) timer and/or an extended PLMN search timer.

Optionally, the NTN operating characteristics may further comprise the condition that the UE does not initiate emergency calls, including an NG-eCall, unless no terrestrial (non-NTN) access can be detected.

Optionally, the NTN operating characteristics may further comprise the condition that the UE does not initiate the delay-intolerant services unless no terrestrial (non-NTN) access can be detected.

According to a third aspect, there is provided a communications system comprising:

the UE as described above;
one or more ground base stations; and
one or more satellites configured to receive the PLMN ID from the one or more ground base stations and transmit the PLMN ID to the UE.

The methods described above may be implemented as a computer program comprising program instructions to operate a computer. The computer program may be stored on a computer-readable medium, including a non-transitory computer-readable medium.

The computer system may include a processor or processors (e.g., local, virtual or cloud-based) such as a Central Processing Unit (CPU), and/or a single or a collection of Graphics Processing Units (GPUs). The processor may execute logic in the form of a software program. The computer system may include a memory including volatile and non-volatile storage medium. A computer-readable medium (CRM) may be included to store the logic or program instructions. For example, embodiments may include a non-transitory computer-readable medium (CRM) storing software comprising instructions executable by one or more computers which, upon such execution, cause the one or more computers to perform the disclosed methods. Non-transitory CRM may refer to a CRM that stores data for short periods or in the presence of power such as a memory device or Random Access Memory (RAM). For example, a non-transitory computer-readable medium may include storage components, such as, a hard disk (e.g., a magnetic disk, an optical disk, a magneto-optic disk, and/or a solid state disk), a compact disc (CD), a digital versatile disc (DVD), a floppy disk, a cartridge, and/or a magnetic tape. The different parts of the system may be connected using a network (e.g. wireless networks and wired networks). The computer system may include one or more interfaces. The computer system may contain a suitable operating system such as UNIX (RTM), Windows (RTM) or Linux (RTM), for example.

It should be noted that any feature described above may be used with any particular aspect or embodiment of the invention.

## Brief description of the Figures

The present invention may be put into practice in a number of ways and embodiments will now be described by way of example only and with reference to the accompanying drawings, in which:

FIG. 1 shows a schematic diagram of a non-terrestrial (NTN) communication system;

FIG. 2 shows a flowchart of a method for operating the NTN communication system of Figure 1; and
FIG. 3 shows a schematic diagram of a computer system used to implement the method of Figure 2.

It should be noted that the figures are illustrated for simplicity and are not necessarily drawn to scale. Like features are provided with the same reference numerals.

## Detailed description of the preferred embodiments

Cellular wireless communication networks provide wide geographical coverage by allowing user (mobile) terminals or User Equipment (UE) to access the network through a Radio Access Network (RAN) formed of cells, each cell having a specific geographical coverage area. In this context, a cell refers to a base station (gNodeB or RAN access node) having a cell identifier (Cell ID), for example as used in Third Generation Partnership Project (3GPP) standards. Coverage areas of cells may overlap and this may assist to avoid areas without coverage. Nevertheless, there are still certain areas without cellular wireless network coverage, for example where the deployment of cells is hazardous, difficult, costly or a combination of these. This may particularly occur in rural areas and developing countries.

Conventional cellular networks have been terrestrial (that is, with access nodes located on the Earth's surface). Non-terrestrial cellular networks have been proposed more recently, for example using an aerial platform or a High Altitude Platform (HAP) or satellite to provide cells. This allows coverage on the ground as it would be by a typical (terrestrial) Mobile Network Operator (MNO) site, allowing access by the same user or mobile terminals supporting this RAN in the terrestrial networks, in particular using 4G or 5G. In this context, a satellite could be considered a type of HAP and, for the purposes of this disclosure, the term HAP could include any type of aerial and/or radio platform, typically operating above 20km in altitude and possibly at a specified, nominal, fixed point relative to the Earth. A RAN provided by an aerial platform, HAP or satellite infrastructure involves complexities.

Cellular communications can have different properties when operating in a terrestrial environment compared with a non-terrestrial environment, such as when a satellite is used to provide cellular coverage. It is preferable for the mobile device to be configured specifically for terrestrial or non-terrestrial operation. However, the mobile device is often unaware of the nature of the base station that it is accessing. The existence of cellBarredNTN in SIB1 broadcasts can indicate that the UE is communicating with a non-terrestrial network (NTN) but this parameter is not always set. This problem can be solved by the UE receiving data from a communications network, extracting the public land mobile network identifier (PLMN ID) from the data and comparing the received PLMN ID with one or more PLMN IDs stored on the mobile device, either within the USIM, hardcoded into the firmware, or stored elsewhere on the UE. When a non-terrestrial PLMN ID is detected, the mobile device modifying its operating characteristics by applying non-terrestrial access specific characteristics or parameters.

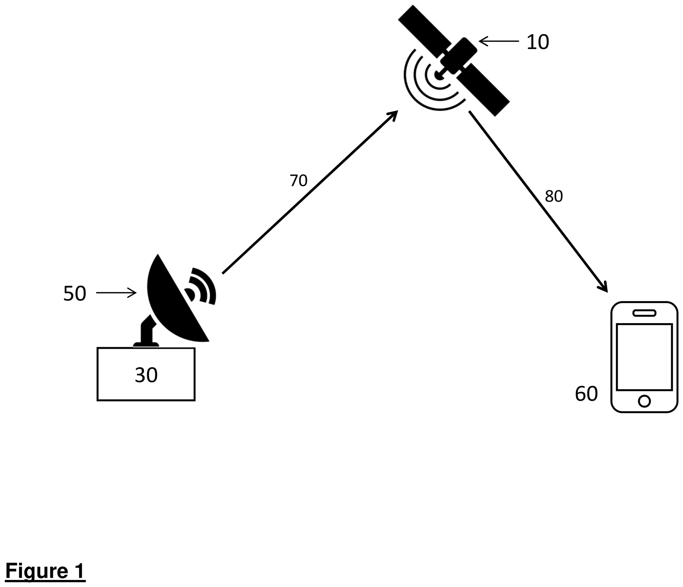

Referring first to Figure 1, there is shown a schematic architecture for an example non-terrestrial cellular RAN, in this case provided through a satellite 10. The satellite 10 acts as a repeater between a ground base station or baseband system 30 and the end users (for example, any SIM-based devices including mobile terminals or UEs 60). The ground base station 30 generates radio signals for transmission by the satellite 10 and also processes baseband signals received by the satellite 10. Therefore, the ground base station 30 provides lower-level base station functions (and may be virtualized or nonvirtualized) and transmits one or more intermediate signals to the satellite 10. Each intermediate signal represents a baseband carrier signal for a respective cell, each carrier signal having a respective bandwidth. These are provided to a satellite gateway antenna unit 50, which acts as a mixer, multiplexer, and ground station radio. The transmission frequency between the gateway antenna unit 50 and the satellite 10 is typically in the Kuband or Q-band. The communication or radio link 70 between the baseband system 30 and the satellite 10 is thereby made through the antenna 50. The intermediate signals (which for both Long Term Evolution, LTE signals, also termed 4G, and 5G signals would be Orthogonal Frequency Division Multiplexed, OFDM, signals) are advantageously transmitted to the satellite 10 multiplexed in frequency. Each intermediate signal may thus define a respective carrier signal.

The satellite 10 transmits the radio signals using individual, respective beams 80 to one or more UEs 60. The satellite 10 may be capable of managing a large number of wireless network cells and they can be communicated (that is, transmitted and/or received) over specific areas through directive beams 80. However, the satellite 10 is limited in both power and bandwidth. The bandwidth limitation especially applies for the link 70 between the satellite 10 and the antenna unit 50. The baseband dimensioning is directly linked to the number of cells to be processed. As a result, the total bandwidth available for transmission (and/or reception) by the satellite 10 in providing the RAN is limited. The same issues may apply whatever form of aerial platform, HAP or satellite is used. Different forms of non-terrestrial cellular RAN provision may also be considered, with similar issues also applying.

When a UE 60 accesses the cellular network using a non-terrestrial RAN, it may be treated as any other user terminal accessing a cellular network, depending on whether the user terminal is a subscriber or not. It is envisaged that many user terminals accessing the non-terrestrial RAN will not have a subscription to the cellular network of the non-terrestrial RAN. The ground base station 30 ground antenna 50 and the satellite 10 act as part of a NTN.

Because the UE 60 receives similar signals from a terrestrial network as it does from an NTN, the UE 60 cannot usually determine the difference unless the base station of the communications network transmits a cellBarredNTN parameter in its system information block type 1 (SIB1) message. This is not always present or interpreted by the UE 60. However, certain aspects of the operation of an NTN require different operating characteristics or parameters to be applied by the UE 60 for it to operate more optimally when communicating with an NTN. Communication networks normally broadcast or transmit a public land mobile network identifier (PLMN ID), usually as part of the SIB1 message. In normal operation, this information is used by the UE 60 to determine the MNO. For example, the UE 60 may have a preferred list of MNOs for roaming. In this case, the PLMN ID is used by the UE 60 to determine if the base station is an NTN base station.

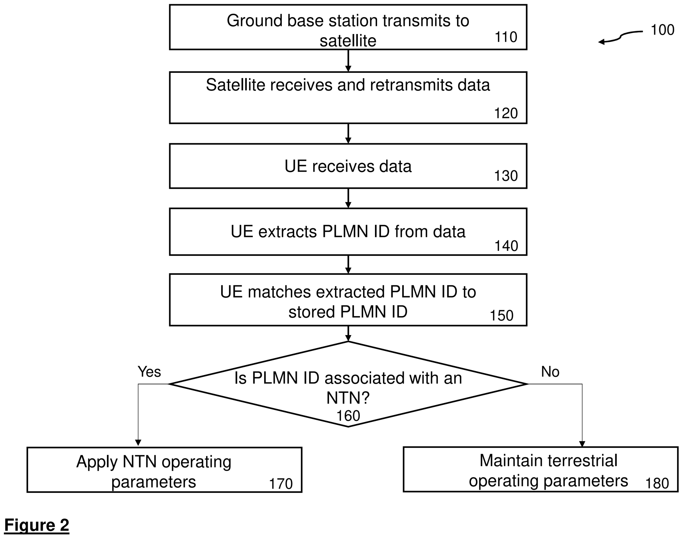

Figure 2 shows a flowchart of a method 100 enabling the UE 60 to improve the optimisation of its operating characteristics when it communicates with an NTN. At step 110, the ground base station 30 transmits data to the satellite 10. The data includes a PLMN ID that is only used for NTN broadcasts. The satellite 10 receives the data and retransmits the data at step 120. The UE 60 receives the data at step 130. At step 140, the UE 60 extracts the PLMN ID from the received data.

The UE 60 has within it stored one or more PLMN IDs. The stored one or more PLMN IDs are NTN PLMN IDs. For example, the one or more PLMN IDs may be stored within a location in the UE 60 that only contains NTN PLMN IDs and/or the UE 60 stores a list of PLMN IDs and data associated with each stored entry indicating that the PLMN ID of that entry is an NTN PLMN ID or a terrestrial PLMN IDs. The NTN PLMN ID(s) may be stored within a universal integrated circuit card (UICC) or SIM card of the UE 60 or elsewhere within the UE 60 (e.g., within software or firmware).

At step 15, the UE 60 matches the PLMN ID extracted from the data with the one or more stored PLMN IDs corresponding to a PLMN ID associated with an NTN. If there is a match with an NTN PLMN ID (step 160), NTN operating characteristics, parameters or other settings are applied to the UE 60. If no match is found, then terrestrial operating characteristics or parameters are either maintained or applied (e.g., when the UE had previously been configured to work with an NTN) to the UE 60.

The data may be transmitted or originate from an Evolved UMTS Terrestrial Radio Access (E-UTRA) or a 5G new radio (NR) base station, for example. When transmitted as a base station broadcast the data may be included in a master information block (MIB) and/or a system information block type 1 (SIB1) message, for example.

There are different operating characteristics or parameters that can be altered or applied to the UE 60 to improve its performance or suitability for operating with an NTN. For example, these may include applying an extended non-access stratum (NAS) timer and/or an extended PLMN search timer. These operating characteristics may further include the condition that the UE does not initiate emergency calls, including an NG-eCall, and/or the delay-intolerant service unless no terrestrial (non-NTN) access can be detected. The method is performed by a computer system 200, which is usually part of the UE 60.

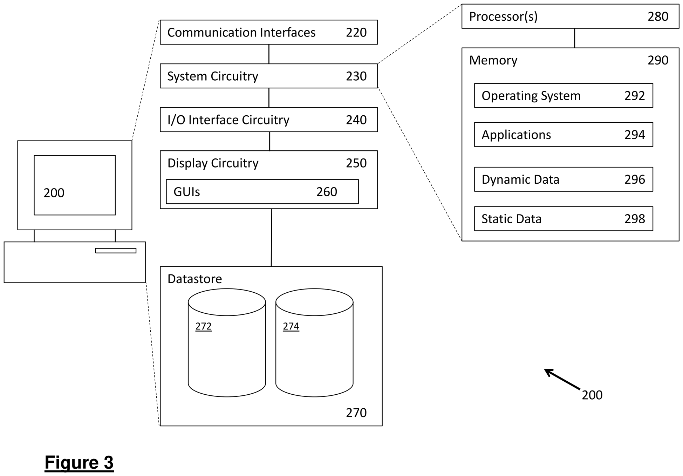

As shown in Figure 3, the computer system 200 includes a number of components including communication interfaces 220, system circuitry 230, input/output (I/O) circuitry 240, display circuitry and interfaces 250, and a datastore 270. The system circuitry 220 can include one or more processors or CPUs 280 and memory 290. The system circuitry 230 may include any combination of hardware, software, firmware, and/or other circuitry. The system circuitry 230 may be implemented, with one or more systems on a chip (SoC), application specific integrated circuits (ASIC), microprocessors, and/or analogue and digital circuits.

The display circuitry may provide one or more graphical user interfaces (GUIs) 260 and the I/O interface circuitry 240 may include touch sensitive or non-touch displays, sound, voice or other recognition inputs, buttons, switches, speakers, sounders, and other user interface elements. The I/O interface circuitry 240 may include microphones, cameras, headset and microphone input /output connectors, Universal Serial Bus (USB) connectors, and SD or other memory card sockets. The I/O interface circuitry 240 may further include data media interfaces (e.g., a CD-ROM or DVD drive) and other bus and display interfaces.

The memory 290 may include volatile (RAM) or non-volatile memory (e.g., ROM or Flash memory). The memory may store the operating system 292 of the computer system 200, applications or software 294, dynamic data 296, and/or static data 298. The datastore or data source 270 may include one or more databases 272, 274 and/or a file store or file system, for example.

The method and system may be implemented in hardware, software, or a combination of hardware and software. The method and system may be implemented either as a server comprising a single computer system or as a distributed network of servers connected across a network. Any kind of computer system or other electronic apparatus may be adapted to carry out the described methods.

A satellite-based non-terrestrial cellular RAN has been discussed. Preferred embodiments may be concerned with a non-terrestrial cellular RAN provided using a Low Earth Orbit (LEO) satellite. A LEO satellite may deliver a network round-trip-time similar to that of terrestrial networks, advantageously improving the inter-operability of satellite and terrestrial RANs and a similar data connection quality to be met across both systems. However, the non-terrestrial cellular RAN may alternatively be based on a Medium Earth Orbit (MEO) satellite, Geostationary Earth Orbit (GEO) satellite, an aerial platform, drones, High Altitude Platform (HAP) or very high altitude platforms.

As described previously, the one or more PLMN ID associated with an NTN may be stored in different locations within the UE 60. For example, these data may be stored on or within the UE's UICC, USIM, or SIM. This pre-defined PLMN ID may be designated for satellite networks by the home network operator, enabling the UE 60 to recognise and act on information indicating that the broadcast uses satellite access when a match occurs.

A pre-defined PLMN ID may also be broadcast or otherwise received by the UE 60. In this example implementation, satellite base stations broadcast a specific PLMN ID that is universally recognised by UEs as an indication of a satellite network. This approach does not rely on data stored within the UICC, USIM, or SIM, but instead uses PLMN IDs reserved for satellite networks, allowing UEs to identify the network type of satellite access based on the broadcast PLMN ID. In this case NTN PLMN ID(s) may be stored outside of the UICC, USIM, or SIM and may even be hard-coded into the software or firmware or the UE 60 as this PLMN ID is unlikely to change often. The NTN PLMN ID(s) may also be stored both within the UICC, USIM, or SIM and elsewhere within the UE 60.

The following provides an example implementation:

$EF_{SATPLMNID}$ (Satellite PLMN ID)

A satellite PLMN ID data field contains the PLMN code that provide satellite access to the UE (see TS 22.261 [106] and TS 23.122 [31]).

| Identifier: '6Fxx' | Structure: Transparent | | Optional |
|---|---|---|---|
| SFI: 'xx' | | | |
| File size: 3n (n ≥ 1) bytes | Update activity: low | | |
| Access Conditions:<br>READ PIN<br>UPDATE ADM<br>DEACTIVATE ADM<br>ACTIVATE ADM | | | |
| Bytes | Description | M/O | Length |
| 1 to 3 | 1st PLMN | M | 3 bytes |
| 4 to 6 | 2nd PLMN | O | 3 bytes |
| : | : | | |
| (3n-2) to (3n) | nth PLMN | O | 3 bytes |

The PLMN ID may take the form of MCC+MNC where:

MCC (Mobile Country Code): This is a three-digit code that uniquely identifies the country of the mobile network.

MNC (Mobile Network Code): This is a two or three-digit code that uniquely identifies the mobile network within the country.

Together, the MCC and MNC form a unique identifier for a specific mobile network operator. However, in present disclosure the PLMN ID may take a form where the MCC and/or the MNC are the same for all NTNs.

As used throughout, including in the claims, unless the context indicates otherwise, singular forms of the terms herein are to be construed as including the plural form and vice versa. For instance, unless the context indicates otherwise, a singular reference herein including in the claims, such as "a" or "an" means "one or more". Throughout the description and claims of this disclosure, the words "comprise", "including", "having" and "contain" and variations of the words, for example "comprising" and "comprises" or similar, mean "including but not limited to", and are not intended to (and do not)

exclude other components. Also, the use of "or" is inclusive, such that the phrase "A or B" is true when "A" is true, "B is true", or both "A" and "B" are true.

The use of any and all examples, or exemplary language ("for instance", "such as", "for example" and like language) provided herein, is intended merely to better illustrate the disclosure and does not indicate a limitation on the scope of the disclosure unless otherwise claimed. No language in the specification should be construed as indicating any non-claimed element as essential to the practice of the disclosure.

The terms "first" and "second" may be reversed without changing the scope of the disclosure. That is, an element termed a "first" element may instead be termed a "second" element and an element termed a "second" element may instead be considered a "first" element.

Any steps described in this specification may be performed in any order or simultaneously unless stated or the context requires otherwise. Moreover, where a step is described as being performed after a step, this does not preclude intervening steps being performed.

It is also to be understood that, for any given component or embodiment described throughout, any of the possible candidates or alternatives listed for that component may generally be used individually or in combination with one another, unless implicitly or explicitly understood or stated otherwise. It will be understood that any list of such candidates or alternatives is merely illustrative, not limiting, unless implicitly or explicitly understood or stated otherwise.

Unless otherwise described, all technical and scientific terms used throughout have a meaning as is commonly understood by one of ordinary skill in the art to which the various embodiments described herein belongs.

As will be appreciated by the skilled person, details of the above embodiment may be varied without departing from the scope of the present invention, as defined by the appended claims.

For example, while satellite NTNs have been described, other types of HAP may be used such as balloon, UAV, drone, or aircraft platforms. The method has been described as altering the operating characteristics of the UE from those optimised for terrestrial operation (a terrestrial base station) to those optimised for NTN operation. However, the UE can revert back (or remain in) a terrestrial configuration when it receives data (e.g., a broadcast from a base station) when the included PLMN ID is not associated with an NTN PLMN ID stored within the UE (within the UICC or elsewhere). The UE can alternate between configurations based on the received PLMN ID. An annex (BI) in the standard can define PLMN IDs (SATPLMNID) or codes that are used with NTN or satellite access.

Other NTN access specific characteristics or parameters may be applied to the UE when it is detected that the UE is accessing a satellite network. For example, the UE can apply policies provided by the MNO, such as whether the UE is allowed or disallowed to access the satellite network in certain geographic areas. Furthermore, the UE may decide not to set up an emergency call (if made) via the satellite access network but move to a terrestrial network to set up the emergency call. Different NTN access specific characteristics may be applied if the UE is roaming or within its home network.

If a single NTN PLMN ID is provisioned in the USIM, the UE may optionally store this PLMN ID in non-volatile memory (NVM) of the UE. However, a modem of the UE can always access the USIM to fetch the information when needed if the information is not stored in the NVM. If the PLMN ID is not provisioned in the USIM, the UE can obtain the NTN PLMN-ID according to annex (BI). This may be hardcoded in software or firmware or may be stored elsewhere within the UE.

Many combinations, modifications, or alterations to the features of the above embodiments will be readily apparent to the skilled person and are intended to form part of the invention. Any of the features described specifically relating to one embodiment or example may be used in any other embodiment by making the appropriate changes.

## Claims

1. A method for user equipment (UE) to access a communications network, the method comprising:

   the UE receiving a public land mobile network identifier (PLMN ID) from the communications network;
   the UE determining that the received PLMN ID is associated with a non-terrestrial network (NTN) by matching the received PLMN ID with a PLMN ID stored within the UE; and
   when the UE determines that the received PLMN ID is associated with an NTN, modifying operating characteristics of the UE.

2. The method of claim 1, wherein the PLMN ID associated with the NTN stored within the UE is stored within a universal integrated circuit card (UICC).

3. The method of claim 2, wherein the PLMN ID stored within the UICC is one of a plurality of PLMN IDs, and further wherein the UE matches the PLMN ID received from the communications network with one of the PLMN IDs stored within the UICC.

4. The method of claim 2 or claim 3, wherein the PLMN ID or PLMN IDs stored within the UICC are stored with data indicating the PLMN ID is associated with an NTN.

5. The method of claim 4, wherein the UICC stores additional PLMN IDs that are absent data indicating an association of the PLMN ID with an NTN.

6. The method of claim 1, wherein the PLMN ID stored within the UE is stored external to the UICC.

7. The method of claim 6, wherein the PLMN ID stored within the UE is stored external to the UICC is a single PLMN ID stored within the UE.

8. The method according to any previous claim, wherein the PLMN ID stored within the UE is used for a plurality of communication networks.

9. The method according to any previous claim, wherein the operating characteristics of the UE are modified by applying an extended non-access stratum (NAS) timer and/or an extended PLMN search timer.

10. The method according to any previous claim, wherein the PLMN ID is received by the UE from a base station broadcast.

11. The method of claim 10, wherein the base station broadcast originates from an Evolved UMTS Terrestrial Radio Access (E-UTRA) or a 5G new radio (NR) base station.12.

12. The method of claim 10 or claim 11, wherein the base station broadcast is a master information block (MIB) and/or a system information block type 1 (SIB1) message.

13. User equipment (UE) comprising:

one or more processors;
a memory store containing one or more PLMN IDs; and
one or more memory storing computer-executable instructions that, when executed by the processor, cause the UE to:

receive a public land mobile network identifier (PLMN ID) from a communications network;
determine that the received PLMN ID is associated with a non-terrestrial network (NTN) by matching the received PLMN ID with a PLMN ID stored within the memory store; and
after determining that the received PLMN ID is associated with an NTN, modifying operating characteristics of the UE.

14. The UE of claim 13, wherein modifying the operating characteristics of the UE further comprises applying an extended non-access stratum (NAS) timer and/or an extended PLMN search timer.

15. A communications system comprising:

the UE of claim 13 or claim 14;
one or more ground base stations; and
one or more satellites configured to receive the PLMN ID from the one or more ground base stations and transmit the PLMN ID to the UE.

10
70
80
50
30
60

**Figure 1**

Ground base station transmits to satellite
110
100
Satellite receives and retransmits data
120
UE receives data
130
UE extracts PLMN ID from data
140
UE matches extracted PLMN ID to stored PLMN ID
150
Is PLMN ID associated with an NTN?
160
Yes
No
Apply NTN operating parameters
170
Maintain terrestrial operating parameters
180

**Figure 2**

Communication Interfaces 220
System Circuitry 230
I/O Interface Circuitry 240
Display Circuitry 250
GUIs 260
Datastore
272
274
270
Processor(s) 280
Memory 290
Operating System 292
Applications 294
Dynamic Data 296
Static Data 298
200
200

Figure 3

Europäisches
Patentamt
European
Patent Office
Office européen
des brevets

# EUROPEAN SEARCH REPORT

Application Number
EP 26 15 5460

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | US 2024/236833 A1 (ROY KOUSTAV [IN] ET AL) 11 July 2024 (2024-07-11)<br>* paragraph [0003] *<br>* paragraph [0111] - paragraph [0118] *<br>* paragraph [0120] *<br>* paragraph [0135] *<br>----- | 1-15 | INV.<br>H04W48/16<br><br>ADD.<br>H04W48/18<br>H04W84/06 |
| X | WO 2024/242349 A1 (SAMSUNG ELECTRONICS CO LTD [KR]) 28 November 2024 (2024-11-28)<br>* paragraph [0140] - paragraph [0143] *<br>----- | 1,13,15 | |
| X | US 2024/251323 A1 (KIM HONG [KR] ET AL) 25 July 2024 (2024-07-25)<br>* paragraph [0009] *<br>* paragraph [0092] - paragraph [0094] *<br>----- | 1,13,15 | |
| | | | TECHNICAL FIELDS SEARCHED (IPC) |
| | | | H04W |

The present search report has been drawn up for all claims

| Place of search | Date of completion of the search | Examiner |
|---|---|---|
| Munich | 23 April 2026 | Tschimben, Stefan |

2

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons
.....................................................................................................
& : member of the same patent family, corresponding document

EPO FORM 1503 03.82 (P04C01)

# ANNEX TO THE EUROPEAN SEARCH REPORT ON EUROPEAN PATENT APPLICATION NO. EP 26 15 5460

This annex lists the patent family members relating to the patent documents cited in the above-mentioned European search report. The members are as contained in the European Patent Office EDP file on
The European Patent Office is in no way liable for these particulars which are merely given for the purpose of information.

23-04-2026

| Patent document cited in search report | Publication date | Patent family member(s) | Publication date |
|---|---|---|---|
| US 2024236833 A1 | 11-07-2024 | NONE | |
| WO 2024242349 A1 | 28-11-2024 | US 20260082316 A1 | 19-03-2026 |
| | | WO 2024242349 A1 | 28-11-2024 |
| US 2024251323 A1 | 25-07-2024 | NONE | |

EPO FORM P0459

For more details about this annex : see Official Journal of the European Patent Office, No. 12/82